# EUROPÄISCHE PATENTSCHRIFT

(11) **EP 3 476 579 B1**
(45) Veröffentlichungstag und Bekanntmachung des Hinweises auf die Patenterteilung: **15.06.2022**
(21) Anmeldenummer: 18202242.6
(22) Anmeldetag: 24.10.2018
(51) Int. Cl.: B29C 70/50, B29C 70/02, B24C 1/06, B29C 65/00, B29C 59/02

(54) **HERSTELLUNGSVORRICHTUNG UND HERSTELLUNGSVERFAHREN FÜR EIN VERBUND-BAUTEIL**
MANUFACTURING APPARATUS AND METHOD FOR PRODUCING A COMPOSITE COMPONENT
DISPOSITIF DE FABRICATION ET PROCÉDÉ DE FABRICATION POUR UN COMPOSANT COMPOSITE

(30) Priorität: 26.10.2017 DE 102017009986
(43) Veröffentlichungstag der Anmeldung: 01.05.2019
(73) Patentinhaber: Siemens Gamesa Renewable Energy Service GmbH, 20097 Hamburg (DE)
(72) Erfinder: Bendel, Urs, 24787 Fockbek (DE)
(74) Vertreter: Glawe, Delfs, Moll

(56) Entgegenhaltungen:
- EP-A1- 2 476 540
- EP-A1- 3 020 541
- WO-A2-2016/025564
- US-A1- 2015 274 911

## Beschreibung

Die Erfindung betrifft ein Herstellungsvorrichtung und ein Herstellungsverfahren für ein Verbund-Bauteil. Die Herstellungsvorrichtung umfasst eine Führungseinrichtung und eine Assemblierungseinheit. Die Führungseinrichtung ist dazu ausgelegt, ein Rodprodukt zu der Assemblierungseinheit zuzuführen. Die Assemblierungseinheit ist dazu ausgelegt, das Rodprodukt mit einem flexiblen Flächengebilde zu verbinden.

Bei der Herstellung von Rotorblättern für Windenergieanlagen können vorgefertigte Verbund-Bauteile verwendet werden. Die Verbund-Bauteile können insbesondere so gestaltet sein, dass sie die in Rotorblättern auftretenden Zugkräfte aufnehmen können.

Zur Aufnahme dieser Kräfte sind Rodprodukte geeignet, die eine im Vergleich zum Querschnitt große Längserstreckung haben und in Längsrichtung große Zugkräfte aufnehmen können. Die Rodprodukte sind quer zu ihrer Längsrichtung flexibel, so dass sie auf eine Rolle aufgewickelt werden können. Da es wenig praktikabel ist, bei der Herstellung von Rotorblättern einzelne Rodprodukte zu verarbeiten, können die Rodprodukte zu einem Vorprodukt in Form eines Verbund-Bauteils vorgefertigt werden, so dass bei der Herstellung des Rotorblatts eine leichte Weiterverarbeitung möglich ist.

In dem Verbund-Bauteil können die Rodprodukte parallel zueinander ausgerichtet sein. Dies kann durch ein flexibles Flächengebilde geschehen, das die Rodprodukte im richtigen Abstand zueinander hält. Das Verbundbauteil ist vorzugsweise so gestaltet, dass es aufgerollt werden kann.

Ein wesentlicher Aspekt bei der Verarbeitung solcher Rodprodukte in Rotorblättern ist es, dass die Oberfläche der Rodprodukte so gestaltet sein muss, dass sie eine innige Verbindung mit der Kunststoffmatrix eingehen kann, die bei der Herstellung des Rotorblatts auf die Rodprodukte aufgebracht wird.

Nach der Herstellung eines Rodprodukts ist die Oberfläche üblicherweise so glatt, dass eine innige Verbindung mit der Kunststoffmatrix nicht möglich ist. Eine Möglichkeit ist, das Rodprodukt bei der Herstellung mit einem Abreißgewebe zu versehen. Wenn das Abreißgewebe dem Rodprodukt gelöst wird, ergibt sich eine strukturierte Oberfläche, die eine gute Verbindung mit der Kunststoffmatrix eingehen kann. Allerdings erfordert es einigen Aufwand, das Abreißgewebe zunächst auf das Rodprodukt aufzubringen und dann vor der Herstellung des Rotorblatts wieder zu entfernen.

WO2016025564 offenbart eine Herstellungsvorrichtung gemäß dem Oberbegriff des Anspruchs 1 und ein Herstellungsverfahren für ein Verbund-Bauteil.

Der Erfindung liegt die Aufgabe zugrunde, eine Herstellungsvorrichtung und ein Herstellungsverfahren für ein Verbund-Bauteil vorzustellen, die auf kostengünstige Weise in einen Fertigungsprozess eingebunden werden können. Ausgehend vom genannten Stand der Technik wird die Aufgabe gelöst mit den Merkmalen der unabhängigen Ansprüche. Vorteilhafte Ausführungsformen sind in den Unteransprüchen angegeben.

Bei der erfindungsgemäßen Herstellungsvorrichtung ist zwischen der Führungseinrichtung und der Assemblierungseinheit eine Strahlvorrichtung angeordnet. Die Strahlvorrichtung ist dazu ausgelegt, das Rodprodukt mit einem Strahlgut zu behandeln.

Die Erfindung hat erkannt, dass erheblicher Aufwand eingespart werden kann, wenn der Arbeitsschritt, mit dem das Rodprodukt für die Verbindung mit der Kunststoffmatrix vorbereitet wird, in den Fertigungsablauf des Verbund-Bauteils eingebunden wird. Wird das Rodprodukt mit dem flexiblen Flächengebilde verbunden, so muss das Rodprodukt ohnehin über seine Länge geführt werden, um relativ zu dem flexiblen Flächengebilde positioniert werden zu können. Durch die mit der Erfindung vorgeschlagene Strahlgutbehandlung erhält das Rodprodukt eine Oberfläche, die für eine gute Verbindung mit der Kunststoffmatrix geeignet ist.

Das Rodprodukt kann einen Querschnitt haben, der im Vergleich zur Länge sehr klein ist. Das Verhältnis zwischen der Länge des Rodprodukts und der größten Querschnittsausdehnung kann beispielsweise größer als 1000 sein, vorzugsweise größer als 5000 sein. Die größte Querschnittsausdehnung des Rodprodukts kann beispielsweise zwischen 2 mm und 50 mm, vorzugsweise zwischen 5 mm und 20 mm liegen.

Im Querschnitt betrachtet kann das Rodprodukt eine an ein Rechteck angenäherte Form haben. Das Verhältnis zwischen der langen Seite des Rechtecks und der kurzen Seite des Rechtecks kann beispielsweise zwischen 1 und 10 liegen, vorzugsweise zwischen 3 und 8 liegen.

Innerhalb des Rodprodukts kann eine Mehrzahl von Fasern sich in Längsrichtung erstrecken.

Die Fasern können beispielsweise Glasfasern oder Kohlenstofffasern sein. Das Rodprodukt kann eine Kunststoffmatrix umfassen, in die die Fasern eingebettet sind. Die Kunststoffmatrix kann beispielsweise einen thermoplastischen Kunststoff oder einen duroplastischen Kunststoff umfassen.

Das Rodprodukt kann im Ausgangszustand des erfindungsgemäßen Verfahrens in aufgerollter Form vorliegen. Die Herstellungsvorrichtung kann eine Abspulvorrichtung umfassen, mit der das Rodprodukt von der Rolle abgespult wird, so dass es zu der Assemblierungseinheit zugeführt werden kann. Die erfindungsgemäße Führungseinrichtung kann ein Element der Abspulvorrichtung sein. Beispielsweise kann die Führungseinrichtung eine oder mehrere in der Abspulvorrichtung geführte Rollen umfassen. Die Führungseinrichtung kann eine Rolle umfassen, auf der das Rodprodukt aufgerollt ist.

Bei der Herstellung des erfindungsgemäßen Bauteils wird vorzugsweise eine Mehrzahl von Rodprodukten mit der Führungseinrichtung zu der Assemblierungseinheit zugeführt. Die erfindungsgemäße Führungseinrichtung kann so eingerichtet sein, dass wenigstens 10, vorzugsweise wenigstens 20, weiter vorzugsweise wenigstens 50 Rodprodukte zu der Assemblierungseinheit zugeführt werden können.

Die Abspulvorrichtung der erfindungsgemäßen Herstellungsvorrichtung kann so ausgelegt sein, dass sie eine Mehrzahl von Rodprodukten abspulen kann. Die Mehrzahl von Rodprodukten wird über die Führungseinrichtung in Richtung der Assemblierungseinheit geführt. In der Assemblierungseinheit können die Rodprodukte parallel zueinander geführt sein, so dass es eine Ebene gibt, in der von jedem Rodprodukt eine Oberfläche angeordnet ist. Das flexible Flächengebilde kann in dieser Ebene geführt werden, um mit den Rodprodukten verbunden zu werden.

Insbesondere können die Rodprodukte so geführt sein, dass die längere Seite des Querschnitts in einer Ebene angeordnet ist. Dies kann sich insbesondere auf die Phase beziehen, in der das Rodprodukt mit dem flexiblen Flächengebilde verbunden wird. Der Abstand zwischen zwei benachbarten Rodprodukten auf dem flexiblen Flächengebilde kann beispielsweise zwischen 0,05 mm und 1 mm liegen, vorzugsweise zwischen 0,1 mm und 0,5 mm liegen.

Das flexible Flächengebilde, mit dem die Rodprodukte verbunden werden, ist in seiner Breite vorzugsweise so bemessen, dass alle Rodprodukte nebeneinander auf das flexible Flächengebilde passen. Das flexible Flächengebilde kann beispielsweise eine Breite zwischen 20 cm und 200 cm, vorzugsweise zwischen 50 cm und 100 cm haben. Die Länge des flexiblen Flächengebildes kann der Länge der Rodprodukte entsprechen. Das flexible Flächengebilde kann von einer Rolle aus zu der Assemblierungseinheit zugeführt werden.

Das flexible Flächengebilde kann ein textiles Flächengebilde sein, beispielsweise in Form eines Gewebes oder eines Vliesstoffs. Möglich ist auch, dass es sich bei dem flexiblen Flächengebilde um ein nicht-textiles Material handelt, wie beispielsweise Folie oder Papier.

Die erfindungsgemäße Herstellungsvorrichtung kann einen Klebstoffdispenser umfassen. Der Klebstoffdispenser kann dazu ausgelegt sein, auf eine dem flexiblen Flächengebilde zugewandte Oberfläche des Rodprodukts und/oder auf ausgewählte Bereiche des flexiblen Flächengebildes einen Klebstoff aufzubringen, beispielsweise indem der Klebstoff aufgesprüht wird. In der Assemblierungseinheit kann das Rodprodukt mit dem flexiblen Flächengebilde in Berührung gebracht werden, so dass beide durch den Klebstoff miteinander verbunden werden. Im verbundenen Zustand bilden die Rodprodukte und das flexible Flächengebilde das erfindungsgemäße Verbund-Bauteil. Die Assemblierungseinheit kann dazu ausgelegt sein, das Verbund-Bauteil auf eine Rolle aufzuwickeln.

Die Strahlvorrichtung kann so eingerichtet sein, dass mit dem Strahlgut in unterschiedliche Richtungen weisende Oberflächen des Rodprodukts behandelt werden können. Die Strahlvorrichtung kann eine Mehrzahl von Austrittsdüsen für das Strahlgut umfassen, die aus unterschiedlichen Richtungen auf das Rodprodukt gerichtet sind. Das Strahlgut kann beispielsweise Korund oder Trockeneis sein. Die Strahlvorrichtung kann insbesondere so eingerichtet sein, dass das Rodprodukt über seinen gesamten Oberflächenbereich mit dem Strahlgut behandelt wird.

Wenn im Bereich der Strahlvorrichtung mehrere Rodprodukte parallel zueinander geführt sind, kann es sich anbieten, dass die Strahlvorrichtung von oben auf die Rodprodukte gerichtete und von unten auf die Rodprodukte gerichtete Austrittsdüsen für das Strahlgut umfasst. Damit kann sichergestellt werden, dass bei jedem Rodprodukt zwei gegenüberliegende Oberflächen mit dem Strahlgut behandelt werden.

Werden zwei Rodprodukte mit engem Abstand parallel zueinander geführt, so ist nicht ohne weiteres sichergestellt, dass auch die zu dem Zwischenraum weisenden Oberflächen der Rodprodukte mit dem Strahlgut behandelt werden. Die Herstellungsvorrichtung kann deswegen einen Spreizer umfassen, mit dem die Mehrzahl von Rodprodukten im Bereich der Strahlvorrichtung in einem größeren Abstand zueinander geführt werden als im Bereich der Assemblierungseinheit. Durch eine solche Spreizung der Rodprodukte relativ zueinander kann sichergestellt werden, dass alle Oberflächen der Rodprodukte mit dem Strahlgut behandelt werden.

Die Spreizung kann sich auf eine horizontale Dimension und/oder auf eine vertikale Dimension beziehen. Horizontale Dimension bezeichnet die Richtung, in der die Rodprodukte nebeneinander geführt sind. Bei einer Spreizung in horizontaler Dimension bleiben die Rodprodukte also innerhalb einer Ebene und es vergrößert sich lediglich der Abstand zweier benachbarter Rodprodukt innerhalb dieser Ebene. Bei einer Spreizung in vertikaler Richtung wird die gemeinsame Ebene der Rodprodukte aufgelöst. Angaben wie horizontal, vertikal, oben, unten beinhalten keine Einschränkung, welche Ausrichtung die Rodprodukte relativ zur Schwerkraft haben.

Wenn die Rodprodukte mit dem flexiblen Flächengebilde verbunden werden, sollten möglichst keine Rückstände mehr von der vorangegangenen Strahlgutbehandlung mehr vorhanden sein. Die Herstellungsvorrichtung kann deswegen mit einer zwischen der Strahlvorrichtung und der Assemblierungseinheit angeordneten Reinigungseinrichtung versehen sein. Die Reinigungseinrichtung kann dazu ausgelegt sein, Rückstände von der Strahlgutbehandlung zu entfernen. Dies kann beispielsweise geschehen, in dem die Reinigungseinrichtung einen Luftstrom erzeugt, der Rückstände mit sich führt. In der Reinigungseinrichtung kann ein Luftstrom aus einer Öffnung austreten und/oder es kann ein Luftstrom durch eine Öffnung hindurch angesaugt werden.

Die Erfindung betrifft außerdem ein Herstellungsverfahren für ein Verbund-Bauteil, bei dem ein Rodprodukt über eine Führungseinrichtung zu einer Assemblierungseinheit zugeführt wird, bei dem das Rodprodukt zwischen der Führungseinrichtung und der Assemblierungseinheit mit einem Strahlgut behandelt wird und bei dem das Rodprodukt in der Assemblierungseinheit mit einem flexiblen Flächengebilde verbunden wird.

Die Erfindung wird nachfolgend unter Bezugnahme auf die beigefügten Zeichnungen anhand vorteilhafter Ausführungsformen beispielhaft beschrieben. Es zeigen:
Fig. 1: eine schematische Seitenansicht einer erfindungsgemäßen Herstellungsvorrichtung;
Fig. 2: eine Ansicht von oben auf eine Herstellungsvorrichtung bei einer alternativen Ausführungsform der Erfindung;
Fig. 3: eine schematische Querschnittsdarstellung einer Strahlvorrichtung;
Fig. 4: die Ansicht gemäß Fig. 3 bei einer anderen Ausführungsform der Erfindung.

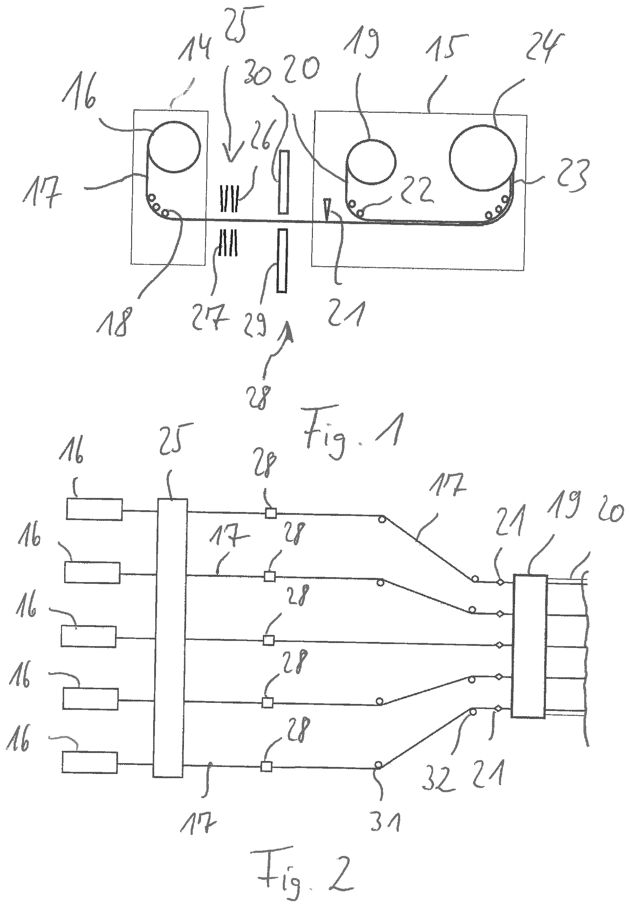

Eine in Fig. 1 gezeigte Herstellungsvorrichtung umfasst eine Abspulvorrichtung 14 und eine Assemblierungseinheit 15. In der Abspulvorrichtung 14 ist eine Mehrzahl von Rollen 16 parallel zueinander angeordnet, von denen in der Seitenansicht gemäß Fig. 1 nur eine Rolle 16 sichtbar ist. Auf jeder Rolle 16 ist ein Rodprodukt 17 aufgerollt. Das Rodprodukt 17 hat eine Länge von beispielsweise 200 m und einen rechteckigen Querschnitt von 1,5 mm x 10 mm. Das Rodprodukt 17 besteht aus Fasern, die sich über die Länge des Rodprodukts 17 erstrecken und die in eine Kunststoffmatrix eingebettet sind.

Die Abspulvorrichtung 14 ist dazu ausgelegt, das Rodprodukt 17 von der Rolle 16 abzurollen und in Richtung der Assemblierungseinheit 15 zu führen. Zu diesem Zweck umfasst die Abspulvorrichtung 14 Führungsrollen 18, die eine Führungseinrichtung im Sinne der Erfindung bilden.

Die Assemblierungseinheit 15 umfasst eine erste Rolle 19, auf der eine Bahn 20 von Vliesstoff mit einer Breite von 70 cm und einer Länge von 200 m aufgewickelt ist. Die Rodprodukte 17 sind in der Assemblierungseinheit 15 mit einem geringen Abstand von weniger als 1 mm parallel zueinander angeordnet und so verteilt, dass sie im Wesentlichen die gesamte Breite der Vliesbahn 20 abdecken.

Am Eingang der Assemblierungseinheit 15 ist ein Klebstoffdispenser 21 angeordnet, der die nach oben weisende Fläche jedes der Rodprodukte 17 mit Klebstoff besprüht. Im weiteren Verlauf wird die nach oben weisende Fläche der Rodprodukte 17 mit der Unterseite der Vliesbahn 20 in Kontakt gebracht, so dass die Rodprodukte 17 an der Vliesbahn 20 festgeklebt werden. Die Vliesbahn 20 wird zu diesem Zweck über Führungsrollen 22 geführt, so dass sie flächig auf den Rodprodukten 17 aufliegt.

Durch die Verbindung zwischen der Vliesbahn 20 und den Rodprodukten 17 ergibt sich ein Verbund-Bauteil 23, das auf einer zweiten Rolle 24 aufgerollt wird. Die Rolle 24 mit dem Verbund-Bauteil 23 kann zu der Fertigungsstätte eines Rotorblatts einer Windenergieanlage transportiert werden, so dass das Verbund-Bauteil 23 bei der Fertigung eines Rotorblatts Verwendung finden kann.

Zwischen der Abspulvorrichtung 14 und der Assemblierungseinheit 15 ist eine Strahlvorrichtung 25 angeordnet. Die Strahlvorrichtung 25 umfasst erste Austrittsdüsen 26 und zweite Austrittsdüsen 27, die von unten und von oben auf die nebeneinander geführten Rodprodukte 17 gerichtet sind. Ein aus den Austrittsdüsen 26, 27 austretendes Strahlgut trifft auf die Oberfläche der Rodprodukte 17 und verändert die Oberflächenstruktur so, dass eine innige Verbindung mit einer bei der Rotorblatt-Herstellung verwendeten Kunststoffmatrix möglich wird.

Zwischen der Strahlvorrichtung 25 und der Assemblierungseinheit 15 ist eine Reinigungseinrichtung 28 angeordnet, um die Rodprodukte 17 von Strahlrückständen zu befreien. Die Reinigungseinrichtung 28 umfasst einen Druckluftaustritt 29 und ein Saugelement 30. Durch die Druckluft werden Strahlrückstände von den Rodprodukten 17 gelöst. Mit dem Saugelement 30 werden die Strahlrückstände aus der Herstellungsvorrichtung heraus entfernt.

In der Ansicht von oben gemäß Fig. 2 sind alle nebeneinander angeordneten Rollen 16 sichtbar. Der Übersichtlichkeit halber sind in Fig. 2 lediglich fünf nebeneinander angeordnete Rollen 16 mit Rodprodukten 17 dargestellt, tatsächlich ist die Anzahl größer.

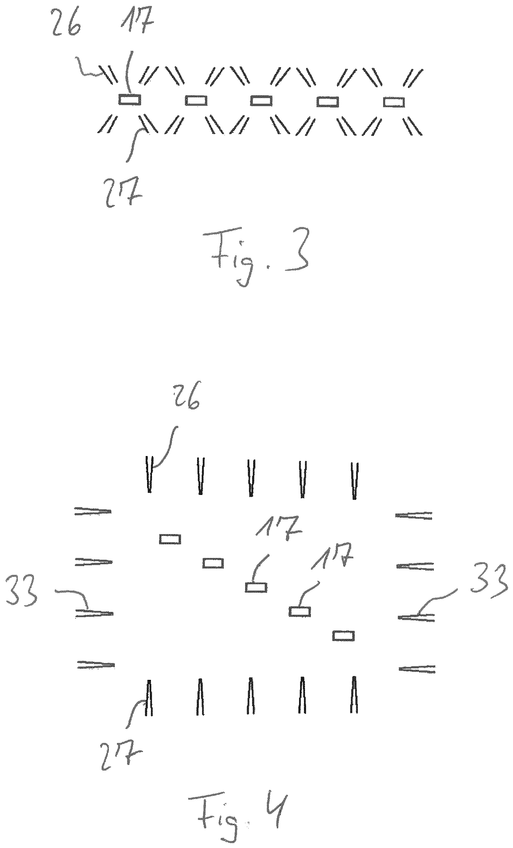

Die Ausführungsform gemäß Fig. 2 umfasst einen Spreizer, der für jedes der Rodprodukte 17 ein Paar von Führungsrollen 31, 32 aufweist, so dass die Rodprodukte 17 innerhalb der Strahlvorrichtung 25 einen größeren Abstand zueinander haben als in der Assemblierungseinheit 15. Auf diese Weise kann das Strahlgut besser von allen Seiten auf die Rodprodukte 17 einwirken. In Fig. 3 sind schräg auf die Rodprodukte 17 gerichtete Austrittsdüsen 26, 27 gezeigt, die eine Behandlung der Rodprodukte 17 von allen Seiten ermöglichen.

Bei der alternativen Ausführungsform gemäß Fig. 4 sind die Rodprodukte 17 außerdem in vertikaler Richtung gespreizt. Zusätzlich zu den von oben wirkenden Austrittsdüsen 26 und den von unten wirkenden Austrittsdüsen 27 umfasst die Strahlvorrichtung zwei Sätze von seitlichen Austrittsdüsen 33. Auch bei dieser Ausführungsform ist sichergestellt, dass die Rodprodukte 17 von allen Seiten mit dem Strahlgut behandelt werden.

## Patentansprüche

1. Herstellungsvorrichtung für ein Verbund-Bauteil (23) mit einer Führungseinrichtung (18) und einer Assemblierungseinheit (15), wobei die Führungseinrichtung (18) dazu ausgelegt ist, ein Rodprodukt (17) zu der Assemblierungseinheit (15) zuzuführen, und wobei die Assemblierungseinheit (15) dazu ausgelegt ist, das Rodprodukt (17) mit einem flexiblen Flächengebilde (20) zu verbinden, **dadurch gekennzeichnet, dass** zwischen der Führungseinrichtung (18) und der Assemblierungseinheit (15) eine Strahlvorrichtung (25) angeordnet ist, um das Rodprodukt (17) mit einem Strahlgut zu behandeln.

2. Herstellungsvorrichtung nach Anspruch 1, **dadurch gekennzeichnet, dass** das Verhältnis zwischen der Länge des Rodprodukts (17) und der größten Querschnittsausdehnung des Rodprodukts (17) größer ist als 1000, vorzugsweise größer ist als 5000.

3. Herstellungsvorrichtung nach Anspruch 1 oder 2, **dadurch gekennzeichnet, dass** das Rodprodukt (17) im Querschnitt betrachtet eine an ein Rechteck angenäherte Form hat.

4. Herstellungsvorrichtung nach einem der Ansprüche 1 bis 3, **gekennzeichnet durch** eine Abspulvorrichtung (14), um das Rodprodukt (17) von einer Rolle (16) abzuspulen.

5. Herstellungsvorrichtung nach Anspruch 4, **dadurch gekennzeichnet, dass** die Führungseinrichtung (18) ein Element der Abspulvorrichtung (14) ist.

6. Herstellungsvorrichtung nach einem der Ansprüche 1 bis 5, **dadurch gekennzeichnet, dass** die Führungseinrichtung (18) dazu ausgelegt ist, eine Mehrzahl von Rodprodukten (17) zu führen, insbesondere wenigstens 10, vorzugsweise wenigstens 20, weiter vorzugsweise wenigstens 50 Rodprodukte.

7. Herstellungsvorrichtung nach einem der Ansprüche 1 bis 6, **dadurch gekennzeichnet, dass** die Rodprodukte (17) in der Assemblierungseinheit (15) parallel zueinander geführt sind.

8. Herstellungsvorrichtung nach Anspruch 7, **dadurch gekennzeichnet, dass** die Rodprodukte (17) in der Assemblierungseinheit (15) so geführt sind, dass die längere Seite des Querschnitts in einer Ebene angeordnet ist.

9. Herstellungsvorrichtung nach Anspruch 7 oder 8, **dadurch gekennzeichnet, dass** der Abstand zwischen zwei benachbarten Rodprodukten (17) auf dem flexiblen Flächengebilde (20) zwischen 0,05 mm und 1 mm liegt, vorzugsweise zwischen 0,1 mm und 0,5 mm liegt.

10. Herstellungsvorrichtung nach einem der Ansprüche 1 bis 9, **dadurch gekennzeichnet, dass** das flexible Flächengebilde (20) eine Breite zwischen 20 cm und 200 cm, vorzugsweise zwischen 50 cm und 100 cm hat.

11. Herstellungsvorrichtung nach einem der Ansprüche 1 bis 10, **gekennzeichnet durch** einen Klebstoffdispenser (21), der dazu ausgelegt ist, auf eine dem flexiblen Flächengebilde (20) zugewandte Oberfläche des Rodprodukts (17) und/oder auf ausgewählte Bereiche des flexiblen Flächengebildes (20) einen Klebstoff aufzubringen.

12. Herstellungsvorrichtung nach einem der Ansprüche 1 bis 11, **dadurch gekennzeichnet, dass** die Strahlvorrichtung (25) so eingerichtet ist, dass das Strahlgut in unterschiedliche Richtungen weisende Oberflächen des Rodprodukts (17) behandelt.

13. Herstellungsvorrichtung nach einem der Ansprüche 1 bis 12, **gekennzeichnet durch** einen Spreizer (31, 32), der die Rodprodukte (17) im Bereich der Strahlvorrichtung (25) in einem größeren Abstand zueinander führt als im Bereich der Assemblierungseinheit (15).

14. Herstellungsvorrichtung nach einem der Ansprüche 1 bis 13, **gekennzeichnet durch** eine Reinigungseinrichtung (29, 30) zum Entfernen von Rückständen der Strahlgutbehandlung.

15. Herstellungsverfahren für ein Verbund-Bauteil (23), bei dem ein Rodprodukt (17) über eine Führungseinrichtung (18) zu einer Assemblierungseinheit (15) zugeführt wird, bei dem das Rodprodukt (17) zwischen der Führungseinrichtung (18) und der Assemblierungseinheit (15) mit einem Strahlgut behandelt wird und bei dem das Rodprodukt (17) in der Assemblierungseinheit (15) mit einem flexiblen Flächengebilde (20) verbunden wird.

## Claims

1. Production apparatus for a composite component (23), having a guide device (18) and an assembly unit (15), wherein the guide device (18) is designed to feed a rod product (17) to the assembly unit (15), and wherein the assembly unit (15) is designed to connect the rod product (17) to a flexible sheet material (20), **characterized in that** a blasting apparatus (25) is arranged between the guide device (18) and the assembly unit (15) in order to treat the rod product (17) with a blasting medium.

2. Production apparatus according to Claim 1, **characterized in that** the ratio between the length of the rod product (17) and the largest cross-sectional extent of the rod product (17) is greater than 1000, preferably greater than 5000.

3. Production apparatus according to Claim 1 or 2, **characterized in that** the rod product (17) has an approximately rectangular form when viewed in cross section.

4. Production apparatus according to one of Claims 1 to 3, **characterized by** an unwinding apparatus (14), in order to unwind the rod product (17) from a roll (16).

5. Production apparatus according to Claim 4, **characterized in that** the guide device (18) is an element of the unwinding device (14).

6. Production apparatus according to one of Claims 1 to 5, **characterized in that** the guide device (18) is designed to guide a plurality of rod products (17), in particular at least 10, preferably at least 20, further preferably at least 50 rod products.

7. Production apparatus according to one of Claims 1 to 6, **characterized in that** the rod products (17) are guided parallel to one another in the assembly unit (15).

8. Production apparatus according to Claim 7, **characterized in that** the rod products (17) are guided in the assembly unit (15) such that the longer side of the cross section is arranged in a plane.

9. Production apparatus according to Claim 7 or 8, **characterized in that** the spacing between two adjacent rod products (17) on the flexible sheet material (20) is between 0.05 mm and 1 mm, preferably between 0.1 mm and 0.5 mm.

10. Production apparatus according to one of Claims 1 to 9, **characterized in that** the flexible sheet material (20) has a width of between 20 cm and 200 cm, preferably between 50 cm and 100 cm.

11. Production apparatus according to one of Claims 1 to 10, **characterized by** an adhesive dispenser (21), which is designed to apply an adhesive to a surface of the rod product (17) that faces the flexible sheet material (20) and/or to selected regions of the flexible sheet material (20) .

12. Production apparatus according to one of Claims 1 to 11, **characterized in that** the blasting apparatus (25) is configured such that the blasting medium treats surfaces of the rod product (17) that face in different directions.

13. Production apparatus according to one of Claims 1 to 12, **characterized by** a spreader (31, 32), which guides the rod products (17) at a greater spacing from one another in the region of the blasting apparatus (25) than in the region of the assembly unit (15).

14. Production apparatus according to one of Claims 1 to 13, **characterized by** a cleaning device (29, 30) for removing residues of the blasting-medium treatment.

15. Production method for a composite component (23), in which a rod product (17) is fed to an assembly unit (15) via a guide device (18), in which the rod product (17) is treated with a blasting medium between the guide device (18) and the assembly unit (15), and in which the rod product (17) is connected to a flexible sheet material (20) in the assembly unit (15).

## Revendications

1. Dispositif de fabrication pour un composant composite (23) comprenant un appareil de guidage (18) et une unité d'assemblage (15), l'appareil de guidage (18) étant conçu pour amener un produit en forme de tige (17) à l'unité d'assemblage (15), et l'unité d'assemblage (15) étant conçue pour relier le produit en forme de tige (17) à une structure plane flexible (20), **caractérisé en ce qu'**un dispositif de grenaillage (25) est agencé entre l'appareil de guidage (18) et l'unité d'assemblage (15) afin de traiter le produit en forme de tige (17) avec un produit de grenaillage.

2. Dispositif de fabrication selon la revendication 1, **caractérisé en ce que** le rapport entre la longueur du produit en forme de tige (17) et la dimension de section transversale maximale du produit en forme de tige (17) est supérieur à 1 000, de préférence supérieur à 5 000.

3. Dispositif de fabrication selon la revendication 1 ou 2, **caractérisé en ce que** le produit en forme de tige (17), tel que vu dans la section transversale, a une forme se rapprochant d'un rectangle.

4. Dispositif de fabrication selon l'une quelconque des revendications 1 à 3, **caractérisé par** un dispositif de dévidage (14) pour dévider le produit en forme de tige (17) d'un rouleau (16).

5. Dispositif de fabrication selon la revendication 4, **caractérisé en ce que** l'appareil de guidage (18) est un élément du dispositif de dévidage (14).

6. Dispositif de fabrication selon l'une quelconque des revendications 1 à 5, **caractérisé en ce que** l'appareil de guidage (18) est conçu pour guider une pluralité de produits en forme de tige (17), notamment au moins 10, de préférence au moins 20, plus préférentiellement au moins 50 produits en forme de tige.

7. Dispositif de fabrication selon l'une quelconque des revendications 1 à 6, **caractérisé en ce que** les produits en forme de tige(17) sont guidés parallèlement entre eux dans l'unité d'assemblage (15).

8. Dispositif de fabrication selon la revendication 7, **caractérisé en ce que** les produits en forme de tige (17) sont guidés dans l'unité d'assemblage (15) de telle sorte que le côté le plus long de la section transversale est agencé dans un plan.

9. Dispositif de fabrication selon la revendication 7 ou 8, **caractérisé en ce que** la distance entre deux produits en forme de tige (17) voisins sur la structure plane flexible (20) est comprise entre 0,05 mm et 1 mm, de préférence entre 0,1 mm et 0,5 mm.

10. Dispositif de fabrication selon l'une quelconque des revendications 1 à 9, **caractérisé en ce que** la structure plane flexible (20) a une largeur comprise entre 20 cm et 200 cm, de préférence entre 50 cm et 100 cm.

11. Dispositif de fabrication selon l'une quelconque des revendications 1 à 10, **caractérisé par** un distributeur d'adhésif (21), qui est conçu pour appliquer un adhésif sur une surface du produit en forme de tige (17) tournée vers la structure plane flexible (20) et/ou sur des zones sélectionnées de la structure plane flexible (20).

12. Dispositif de fabrication selon l'une quelconque des revendications 1 à 11, **caractérisé en ce que** le dispositif de grenaillage (25) est adapté de telle sorte que le produit de grenaillage traite des surfaces du produit en forme de tige (17) orientées dans des directions différentes.

13. Dispositif de fabrication selon l'une quelconque des revendications 1 à 12, **caractérisé par** un écarteur (31, 32), qui guide les produits en forme de tige (17) dans la zone du dispositif de grenaillage (25) à une distance plus grande les uns des autres que dans la zone de l'unité d'assemblage (15).

14. Dispositif de fabrication selon l'une quelconque des revendications 1 à 13, **caractérisé par** un appareil de nettoyage (29, 30) pour éliminer les résidus du traitement par le produit de grenaillage.

15. Procédé de fabrication d'un composant composite (23), dans lequel un produit en forme de tige (17) est amené à une unité d'assemblage (15) par l'intermédiaire d'un appareil de guidage (18), dans lequel le produit en forme de tige (17) est traité par un produit de grenaillage entre l'appareil de guidage (18) et l'unité d'assemblage (15), et dans lequel le produit en forme de tige (17) est relié à une structure plane flexible (20) dans l'unité d'assemblage (15).
